Europäisches Patentamt

European Patent Office

Office européen des brevets

(19)

(11) Numéro de publication: **0 270 718 B1**

## (12) FASCICULE DE BREVET EUROPEEN

(45) Date de publication de fascicule du brevet:
**18.09.91**

(51) Int. Cl.5: **H02K 9/22**, H02K 3/32, H02K 3/52

(21) Numéro de dépôt: **86402779.2**

(22) Date de dépôt: **12.12.86**

(54) **Rotor à pôles à griffes pour un générateur électrique, tel que alternateur de véhicules automobiles.**

(43) Date de publication de la demande:
**15.06.88 Bulletin 88/24**

(45) Mention de la délivrance du brevet:
**18.09.91 Bulletin 91/38**

(84) Etats contractants désignés:
**DE ES GB IT**

(56) Documents cités:
**DE-A- 2 817 999
DE-A- 3 336 340
FR-A- 2 093 554
FR-A- 2 556 147
GB-A- 2 123 617**

**PATENTS ABSTRACTS OF JAPAN, vol. 2, no. 129, 27 octobre 1978, page 7786 E 78; & JP-A-53 96 407 (HITACHI SEISAKUSHO K.K.) 23-08-1978**

(73) Titulaire: **VALEO EQUIPEMENTS ELECTRI-QUES MOTEUR**
**2, Rue André Boulle**
**F-94000 Creteil(FR)**

(72) Inventeur: **Richard, Daniel**
**1, boulevard Pablo Picasso**
**F-94000 Créteil(FR)**

(74) Mandataire: **Gamonal, Didier**
**Société VALEO Service Propriété Industriel-le 30, rue Blanqui**
**F-93406 Saint Ouen(FR)**

EP 0 270 718 B1

## Description

La présente invention concerne un rotor à pôles à griffes pour un générateur électrique tel que alternateur de véhicules automobiles, ce rotor comprenant deux roues polaires, en regard l'une de l'autre, disposées sur l'arbre du rotor de part et d'autre d'un noyau monté sur ledit arbre et un enroulement inducteur disposé coaxialement sur ledit noyau entre lesdites roues polaires.

Dans de tels rotors, il n'est pas possible, ou tout au moins il est très difficile de bobiner directement le fil inducteur sur le noyau, sans prévoir des joues latérales qui maintiennent compact l'enroulement obtenu.

Pour cela, il est connu de bobiner le fil inducteur sur un bobineau disposé sur le noyau et délimité de matière par deux joues latérales. Généralement, ces bobineaux sont obtenus par moulage de matière plastique ou formage de carton.

Il est évident que l'utilisation de ces matières isolantes pour l'obtention des bobineaux, ne favorise pas la dissipation thermique de l'enroulement inducteur à travers la masse métallique du rotor, mais constitue plutôt un frein à cette dissipation. Il en résulte des performances de la machine bien en dessous de celles que l'on pourrait attendre.

On connaît par le document DE-A-33 36 340 un bobinage direct du fil inducteur sur le noyau mais cette solution nécessite un noyau muni d'au moins une joue ménagée de matière avec ledit noyau ce qui complique sa fabrication et augmente donc son coût.

Le document FR-A-2 556 147 illustre un noyau lisse sur lequel on rapporte deux flasques comportant chacun une jupe tubulaire s'interposant entre le noyau central et le bobinage inducteur de manière à ce que les extrémités de chacune des jupes tubulaires soient en contact l'une avec l'autre formant ainsi un seul manchon sur lequel le conducteur formant la bobine peut être directement enroulé. Cependant il existe entre le noyau central et le bobinage inducteur ladite jupe tubulaire ce qui empêche une évacuation maximum des calories.

La présente invention remédie à ces inconvénients et propose à cet effet un rotor à pôles à griffes pour un générateur électrique tel qu'alternateur de véhicules automobiles, ce rotor comprenant deux roues polaires disposées sur l'arbre du rotor en regard l'une de l'autre, de part et d'autre d'un noyau monté sur ledit arbre et un enroulement inducteur disposé coaxialement sur le noyau entre lesdites roues polaires et alimenté à travers un ensemble de bagues collectrices disposé à force sur l'arbre du rotor, le fil inducteur de l'enroulement étant bobiné directement sur le noyau entre deux joues métalliques rapportées sur la périphérie des extrémités dudit noyau central, caractérisé en ce que les joues métalliques présentent sur leur périphérie des appendices pétaloïdes dont les bords latéraux sont rabattus sur toute ou en partie de leur longueur et entre lesquels sont susceptibles de s'encastrer respectivement les griffes des pôles, lesquels appendices d'un nombre égal au nombre de griffes qu'ils accolent sont aptes à se déformer par cambrage le long des surfaces internes des griffes du pôle correspondant sous la pression du montage desdits pôles sur l'arbre du rotor.

La description qui va suivre en regard des dessins annexés fera mieux comprendre comment l'invention peut être réalisée.

- la figure 1 est une vue en coupe longitudinale de l'alternateur objet de l'invention.
- la figure 2 est une vue frontale d'une joue métallique objet de l'invention.
- la figure 3 est une vue en coupe longitudinale du noyau équipé des joues métalliques et de l'écoulement inducteur avant montage entre les roues polaires à griffes.
- la figure 4 est une vue en perspective simplifiée d'une joue métallique objet de l'invention et des embouts tubulaires devant s'y fixer.
- la figure 5 représente à plus grande échelle l'un des embouts tubulaires.

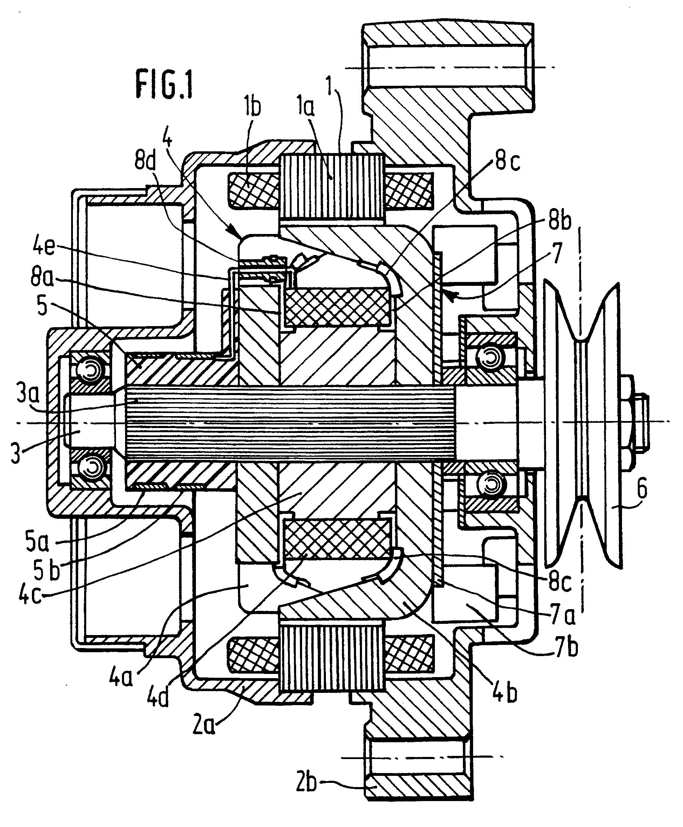

Selon un mode préféré de réalisation de l'invention, l'alternateur représenté à la figure 1, comporte un stator 1 constitué d'un paquet de tôles 1a et d'enroulements de phases 1b, ledit stator 1 étant pincé entre deux flasques d'extrémités 2a et 2b portant un rotor 4 dont l'arbre 3 est entraîné en rotation par un moteur à combustion interne (non représenté) par l'intermédiaire d'une poulie 6. Sur ledit arbre 3 sont montées à force deux roues polaires à griffes 4a et 4b, disposées en regard l'une de l'autre, de part et d'autre d'un noyau central 4c autour duquel est bobiné un enroulement inducteur 4d. Cet enroulement inducteur 4d est maintenu en position, lors de l'opération de bobinage du fil inducteur sur le noyau central 4c, par deux joues métalliques 8a et 8b qui sont rapportées sur le noyau central 4c. L'énergie calorifique dégagée par l'enroulement inducteur 4d est facilement transmise à la masse métallique du rotor 4 grâce au fait que ledit enroulement inducteur 4d est bobiné directement sur le noyau central 4c et en contact direct latéralement avec les joues 8a et 8b métalliques évitant ainsi l'effet de frein thermique connu par les bobineaux en matière plastique de l'art antérieur.

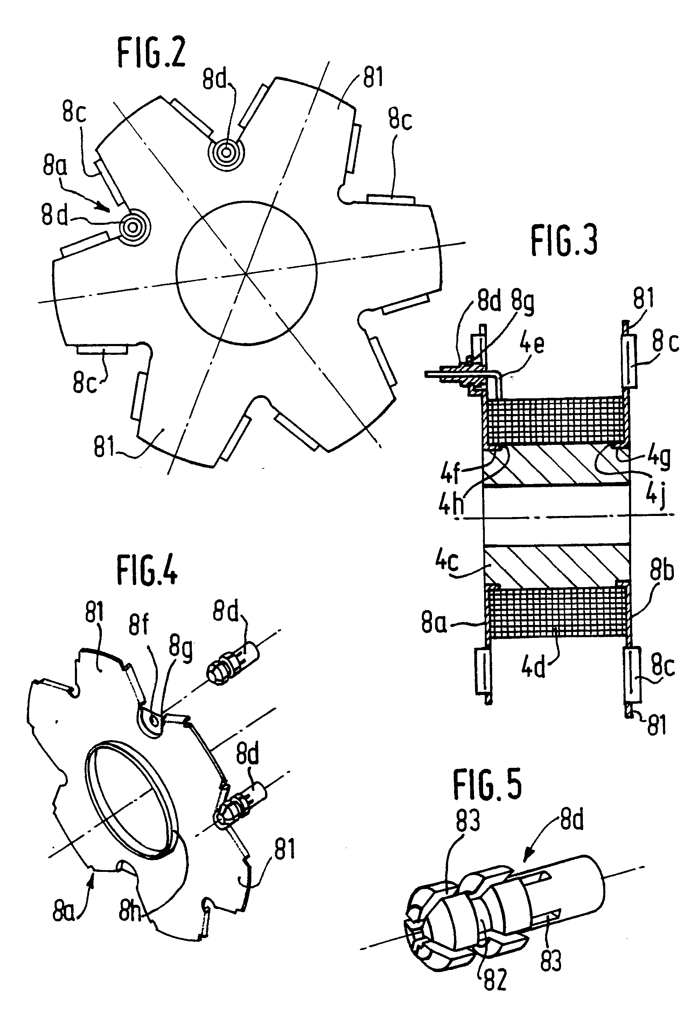

Conformement à l'invention, comme représentées sur la figure 2, les joues métalliques 8a et 8b comportent autant d'appendices pétaloïdes 81 que les roues polaires respectives 4a, 4b auxquelles les joues métalliques 8a et 8b sont accolées, comportent de griffes. Chacun des appendices pétaloïdes 81 comporte des bords latéraux 8c rabattus vers l'extérieur c'est-à-dire respectivement vers les roues polaires à griffes 4a et 4b afin d'éviter à l'enroulement inducteur 4d de se blesser contre l'arête vive formée par le bord latéral de la griffe et sa surface interne. Deux embouts tubulaires 8d, fixés sur la joue métallique 8a et avantageusement réalisés en matière plastique sont adaptés à constituer un guidage du fil inducteur 4e dont les deux extrémités sont reliées à deux bagues collectrices 5a et 5b sur lesquelles frottent des balais (non représentés), lesdites bagues collectrices 5a et 5b sont serties sur un support en matière plastique 5, emmanché à force sur l'arbre 3 et maintenu à rotation grâce à des cannelures 3a ménagées sur l'arbre 3. Un ventilateur 7 constitué d'un disque 7a sur lequel sont fixées des pales de ventilation 7b, est accolé à la roue polaire 4b. Les joues latérales 8a et 8b, sont représentées, sur la figure 3, serties sur le noyau central 4c. On remarque que les bords latéraux 8c, des appendices pétaloïdes 81 sont rabattus vers l'extérieur. Quand les roues polaires à griffes 4a et 4b se présentent face à l'ensemble représenté à la figure 3, pendant l'opération de montage, les griffes sont présentées face aux appendices pétaloïdes 81, et, sous la pression exercée lors de l'assemblage noyau-roues polaires, lesdits appendices pétaloïdes 81 se déforment et viennent épouser par cambrage la surface interne de chacune des griffes, et par là même, lesdites griffes s'encastrent entre les bords latéraux rabattus 8c de chacun des appendices pétaloïdes 81. Le fil inducteur 4e traverse les deux embouts tubulaires en matière isolante 8d, représentés sur les figures 2 et 3, empêchant au fil inducteur 4e de s'écorcher en traversant la joue métallique 8a.

La figure 4 représente la joue métallique 8a en perspective, devant être équipée des deux embouts tubulaires en matière plastique 8d. Des moyens d'encliquetage des embouts tubulaires en matière plastique 8d sont constitués entre autres par un trou 8f ménagé dans une surface 8g obtenue par embouti entre deux appendices pétaloïdes 81 successifs, laquelle surface 8g est décalée par rapport au plan formé par la joue métallique 8a, comme montré aux figures 3 et 4.

La figure 5 représente un des embouts tubulaires 8d, sur lequel sont ménagées des fentes longitudinales 83 donnant ainsi à l'une des extrémités de l'embout tubulaire 8d, une certaine élasticité, ce qui lui permet, grâce à une rainure circulaire 82 ménagée sur toute la périphérie de l'embout tubulaire 8d, à l'extrémité expansible, de s'encliqueter dans les moyens 8f/8g prévus à cet effet (figure 4), situés entre deux des appendices pétaloïdes 81. Cet embout tubulaire 8d, guide le fil inducteur 4e au travers de la joue métallique 8a, ce qui évite au fil inducteur 4e de se blesser lors de son passage dans la joue métallique 8a, pour se connecter au collecteur 5.

Comme représentées à la figure 3, les joues métalliques 8a et 8b peuvent être fixées sur le noyau 4c par tout moyen connu, tel par exemple en emmanchant à force lesdites joues 8a et 8b sur les extrémités périphériques 4f et 4g dudit noyau 4c, celles-ci étant munies à cet effet d'une collerette 8h (figure 4) dirigée dans le sens opposé de celui des bords latéraux rabattus 8c. Les extrémités 4f et 4g du noyau 4c peuvent être d'un diamètre légèrement plus petit que celui extérieur dudit noyau de manière à constituer des butées 4h et 4j aux extrémités libres des collerettes 8h des joues métalliques 8a et 8b.

## Revendications

1. Rotor à pôles à griffes (4) pour un générateur électrique tel qu'alternateur de véhicules automobiles, ce rotor (4) comprenant deux roues polaires (4a,4b) disposées sur l'arbre (3) du rotor (4) en regard l'une de l'autre, de part et d'autre d'un noyau (4c) monté sur ledit arbre (3) et un enroulement inducteur (4d) disposé coaxialement sur le noyau (4c) entre lesdites roues polaires (4a,4b) et alimenté à travers un ensemble de bagues collectrices (5) disposé à force sur l'arbre du rotor, le fil inducteur de l'enroulement (4d) étant bobiné directement sur le noyau (4c) entre deux joues métalliques (8a,8b) rapportées sur la périphérie des extrémités dudit noyau central (4c), caractérisé en ce que les joues métalliques (8a,8b) présentent sur leur périphérie des appendices pétaloïdes (81) dont les bords latéraux (8c) sont rabattus sur toute ou en partie de leur longueur et entre lesquels sont susceptibles de s'encastrer respectivement les griffes des pôles, lesquels appendices d'un nombre égal au nombre de griffes qu'ils accolent sont aptes à se déformer par cambrage le long des surfaces internes des griffes du pôle correspondant sous la pression du montage desdits pôles sur l'arbre (3) du rotor (4).

2. Rotor (4) selon la revendication 1, caractérisé en ce que deux embouts tubulaires (8d) en matière isolante et aptes à être traversés par le fil inducteur (4e) de l'enroulement (4d) sont fixés par des moyens d'encliquetage élastiques respectivement entre deux appendices pétaloïdes (81) successifs de la joue métallique (8a) sise près de l'ensemble de bagues collectrices (5) du rotor (4) de manière telle que leurs extrémités libres soient dirigées vers ledit ensemble de bagues collectrices (5) entre deux griffes successives.

3. Rotor (4) selon la revendication 2, caractérisé en ce que les moyens d'encliquetage élastiques des embouts tubulaires (8d) sont constitués entre autres, par une rainure circulaire (82) ménagée à l'extrémité expansible desdits embouts tubulaires (8d) dans laquelle s'ancre le bord périphérique de trous correspondants ménagés dans la joue métallique (8a).

4. Rotor selon la revendication 1, caractérisé en ce que les joues métalliques (8a,8b) comportent une ouverture circulaire bordée par une collerette (8h), dont le diamètre est adapté à procurer un emmanchement à force desdites joues métalliques (8a,8b) sur les extrémités périphériques (4f,4g) du noyau (4c), laquelle collerette (8h) est dirigée dans le sens opposé des bords latéraux rabattus (8c) des appendices pétaloïdes (81).

5. Rotor selon la revendication 3, caractérisé en ce que l'extrémité expansible des embouts tubulaires (8d) est réalisée par au moins une fente longitudinale ménagée à partir de ladite extrémité au-delà de la rainure circulaire (82).

## Claims

1. A rotor (4) with claw-type poles, for an electrical generator such as an alternator for motor vehicles, the said rotor (4) comprising two pole wheels (4a, 4b) disposed on the shaft (3) of the rotor (4) and facing each other, on either side of a core (4c) which is mounted on the said shaft (3), and an inductive winding (4d), which is disposed coaxially on the core (4c) between the said pole wheels (4a, 4b), and which is supplied through a slip ring assembly (5) force-fitted on the rotor shaft, the inductive wire of the winding (4d) being wound directly on the core (4c) between two metallic rings (8a, 8b) which are carried on the periphery of the ends of the said central core (4c), characterised in that the metallic rings (8a, 8b) have peripherally disposed petalloid projections (81), the lateral edges (8c) of which are bent over along all or part of their length, and between which the respective claws of the poles are arranged to fit, the said projections, the number of which is equal to the number of claws which they engage, being adapted to be deformed by bending along the inner surfaces of the claws of the corresponding pole under the pressure with which the said poles are fitted on the shaft (3) of the rotor (4).

2. A rotor (4) according to Claim 1, characterised in that two tubular ferrules (8d) of insulating material, which are adapted for the inductive wire (4e) of the winding (4d) to extend through them, are secured by resilient snap-fit means between two successive petalloid projections (81) of the metallic ring (8a) situated proximal to the slip ring assembly (5) of the rotor (4), in such a way that their free ends are directed towards the said slip ring assembly (5) between two successive claws.

3. A rotor (4) according to Claim 2, characterised in that the resilient snap-fit means of the tubular ferrules (8d) are constituted partly by a circular groove (82) formed on the expandable end of the said tubular ferrules (8d), in which the peripheral edge of the corresponding holes formed in the metallic ring (8a) is anchored.

4. A rotor according to Claim 1, characterised in that the metallic rings (8a, 8b) have a circular aperture bounded by a collar portion (8h), the diameter of which is adapted to produce a force fit of the said metallic rings (8a, 8b) on the peripheral ends (4f, 4g) of the core (4c), with the said collar portion (8h) extending away from the bent-over lateral edges (8c) of the petalloid projections (81).

5. A rotor according to Claim 3, characterised in that the expandable end of the tubular ferrules (8d) is formed with at least one longitudinal slot extending from the said end beyond the circular groove (82).

## Patentansprüche

1. Läufer mit Klauenpolen (4) für einen elektrischen Generator, wie z.B. einen Wechselstromgenerator von Kraftfahrzeugen, wobei dieser Läufer (4) zwei Polräder (4a, 4b) enthält, die einander gegenüber an der Welle (3) des Läufers (4) beiderseits eines Kerns (4c) angeordnet sind, der an der genannten Welle (3) angebracht ist, und versehen mit einer Erregerwicklung (4d), die koaxial am Kern (4c) zwischen den genannten Polrädern (4a, 4b) angeordnet ist und über eine fest an der Läuferwelle angeordnete Schleifringeinheit (5) gespeist wird, wobei der Erregerdraht der Wicklung (4d) direkt auf den Kern (4c) zwischen zwei Metallbacken (8a, 8b) gewickelt ist, die an der Peripherie der Enden des genannten Mittelkerns (4c) angebaut sind, **dadurch gekennzeichnet,** daß die Metallbacken (8a, 8b) an ihrer Peripherie lappenförmige Ansätze (81) aufweisen, deren Seitenkanten (8c) über die gesamte Länge oder einen Teil der Länge umgeschlagen sind und zwischen denen jeweils die Polklauen eingefügt werden können, wobei die genannten Ansätze in gleicher Anzahl vorhanden sind wie die zugehörigen Klauen und Prägung entlang der Innenflächen der Klauen des entsprechenden Pols und die unter dem Druck beim Einbau der genannten Pole an der Welle (3) des Läufers (4) verformt werden können.

2. Läufer (4) nach Anspruch 1, **dadurch gekennzeichnet,** daß zwei rohrförmige Ansätze (8d) aus Isoliermaterial, durch welche der Erregerdraht (4e) der Wicklung (4d) hindurch verlaufen kann, mit Hilfe elastischer Einrastmittel jeweils zwischen zwei aufeinanderfolgenden lappenförmigen Ansätzen (81) der Metallbacke (8a) befestigt werden, die in Nähe der Schleifringeinheit (5) des Rotors (4) so angebracht ist, daß ihre freien Enden der genannten Schleifringeinheit (5) zwischen zwei aufeinanderfolgenden Klauen zugewandt sind.

3. Läufer (4) nach Anspruch 2, **dadurch gekennzeichnet,** daß die elastischen Einrastmittel der rohrförmigen Ansätze (8d) unter anderem aus einer ringförmigen Nut (82) bestehen, die am erweiterbaren Ende der genannten rohrförmigen Ansätze (8d) vorgesehen ist, worin die Umfangskante der entsprechenden Löcher in der Metallbacke (8a) verankert wird.

4. Läufer nach Anspruch 1, **dadurch gekennzeichnet,** daß die Metallbacken (8a, 8b) eine kreisförmige Öffnung aufweisen, die von einem Kragen (8h) eingefaßt ist, dessen Durchmesser ein Aufpressen der genannten Metallbacken (8a, 8b) auf die Umfangsenden (4f, 4g) des Kerns (4c) ermöglicht, wobei der genannte Kragen (8h) in der den umgeschlagenen Seitenkanten (8c) der lappenförmigen Ansätze (81) entgegengesetzten Richtung verläuft.

5. Läufer nach Anspruch 3, **dadurch ge kennzeichnet,** daß das erweiterbare Ende der rohrförmigen Ansätze (8d) durch wenigstens einen Längsschlitz gebildet wird, der vom genannten Ende aus jenseits der kreisförmigen Nut (82) verläuft.

FIG.1

# FIG.2

# FIG.3

# FIG.4

# FIG.5